# EUROPÄISCHE PATENTSCHRIFT

(11) **EP 0 593 144 B1**
(45) Veröffentlichungstag und Bekanntmachung des Hinweises auf die Patenterteilung: **11.09.1996**
(21) Anmeldenummer: 93250279.2
(22) Anmeldetag: 15.10.1993
(51) Int. Cl.: B03B 5/48, B03B 11/00, B01D 21/00

(54) **Entwässerungs-Schöpfrad**
Drainage scoop wheel
Roue d'égouttage à godets

(30) Priorität: 15.10.1992 DE 4234796
(43) Veröffentlichungstag der Anmeldung: 20.04.1994
(73) Patentinhaber: Drechsle, Roland, F-68330 Huningue (FR)
(72) Erfinder: Drechsle, Roland, F-68330 Huningue (FR)
(74) Vertreter: Brümmerstedt, Hans Dietrich, Dipl.-Ing.

(56) Entgegenhaltungen:
- DE-A- 2 432 109
- FR-A- 994 118
- GB-A- 2 190 860
- NL-A- 6 608 881

## Beschreibung

Gesetzliche Bestimmungen und Vorschriften für den Wasserhaushalt und hohe Kosten für den Wasserverbrauch sowie das dabei anfallende Abwasser fordern von der Sand- und Kiesindustrie immer höhere Anstrengungen.

Im Materialaufbereitungsprozeß in der Sand- und Kiesindustrie gehört das Waschen neben dem Klassieren zu den wichtigsten Vorgängen. Verbunden mit dem Waschen ist gleichzeitig die erforderliche Trennung des Waschgutes von dem Waschwasser und den wasserlöslichen Verunreinigungen wie Lehm und Schlamm.

Die Klassierung erfolgt in Waschanlagen, in denen nacheinander in mehreren Decks unter Bebrausung mit Wasser das grobkörnige Material abgesiebt wird. Das verbleibende Gemisch aus feinkörnigem Sand, Lehm, Schlamm und Wasser wird dann besonderen Wasch-, Entwässerungs- und Rückgewinnungsanlagen zugeführt.

Aus dem Prospekt FST STICHWEH Wasch und Entwässerungsschöpfräder ist ein Entwässerungs-Schöpfrad zur Rückgewinnung von Feinsand bekannt, bestehend aus einer Wanne, einem in der Mitte der Wanne angeordneten, auf seinem Umfang mit Schöpfbechern versehenen drehbaren Rad, einem Einlauf für das Sand-, Lehm-, Schlamm- und Wassergemisch an der einen Seite der Wanne im Bereich der aus dem Wasserspiegel auftauchenden Schöpfbecher, einem Auslauf für den von den Schöpfbechern abgegebenen Sand an der gegenüberliegenden Seite der Wanne im Bereich der in den Wasserspiegel eintauchenden Schöpfbecher, koaxial zu dem Rad auf dessen beiden Seiten angeordneten, gegensinnig angetriebenen Förderschnecken zum Zubringen des auf dem Boden der Wanne abgesetzten Feinsandes in den Bereich des Rades, und Überströmrinnen an den beiden anderen, parallel zur Radebene verlaufenden Seiten der Wanne.

Je nach Feststoffleistung dreht sich das Rad nur mit 5 bis 20 U/h, so daß der abgesetzte Sand durch das Rad bzw. die Förderschnecken nicht oder nur im geringen Maße aufgewirbelt wird. Der größte Teil des Sandes wird unmittelbar von den Bechern erfaßt. Der Feinsand, Lehm und Schlamm werden nur am Einlauf aufgewirbelt und mit der am Einlauf beginnenden Strömung in die Wanne gespült. Das Wasser fließt nach beiden Seiten zu den Überströmrinnen, wobei die Strömungsgeschwindigkeit halbiert wird. Dabei setzt sich ein Teil des Feinsandes ab und wird von den Förderschnecken zur Mitte transportiert und dort von den Schöpfbechern aufgenommen. Der restliche Feinsand mit dem Lehm und Schlamm geht über die Überlaufrinnen direkt in das Abwasser oder zuvor noch in Absetzbecken.

Der Erfindung liegt die Aufgabe zugrunde, die Frischwasser- und Abwassermenge bei der Kies-und Sandaufbereitung zu reduzieren sowie gleichzeitig den Wirkungsgrad der Feinsandrückgewinnung und die Qualität des Feinsandes zu verbessern.

Diese Aufgabe wird erfindungsgemäß dadurch gelöst, daß innerhalb der Schöpfradwanne an der dem Einlauf gegenüberliegenden Wannenwandung beidseitig vom Rad Kanäle angeordnet sind. Diese Kanäle führen an ihrem oberen Ende über eine oder mehrere Durchtrittsöffnung(en) in der Wannenwandung in ein oder mehrere Wassersammelreservoir(s), und zwar derart, daß sich in diesen Wassersammelreservoirs der gleiche Flüssigkeitsstand wie in der Schöpfradwanne einstellt, wobei die Wassersammelreservoirs mit mindestens einer saugenden Pumpe verbunden sind, die das durch die Kanäle aus der Wanne strömende Wasser als Recyclingwasser in eine dem Schöpfrad vorgeschaltete Kieswaschanlage zurückpumpt bzw. zurückpumpen. Die Kanäle weisen an ihrem unteren Ende im genügenden Abstand von der Abwasserschicht Ansaugöffnungen auf, von denen aus gesehen sie zur Seite des Sandauslaufs hin schräg nach oben verlaufen, wobei sie in weiterer Ausgestaltung der Erfindung in ihrem Inneren ein Paket paralleler Platten mit im wesentlichen gleichem Neigungswinkel aufnehmen, welches unterhalb der in der Wannenwandung vorgesehenen Durchtrittsöffnungen endet.

In den Wannen herkömmlicher Entwässerungs-Schöpfräder findet lediglich ein natürlicher Sedimentationsvorgang statt, d.h. ein durch die Wechselwirkung von Schwerkraft und Auftrieb charakterisierter und damit relativ lang dauernder Trennvorgang. Daraus resultiert zum einen, daß kleinere Feinsandteile nicht genügend Zeit zum Absetzen haben, und damit mit dem Abwasser über die Überströmrinnen abfließen. Zum anderen setzen sich größere, nicht von der Abwasserströmung erfaßte Lehmteilchen auf dem Wannenboden des Schöpfrades ab und werden mit dem Feinsand ausgetragen. Die Trennschärfe ist also in den Wannen herkömmlicher Entwässerungs-Schöpfräder relativ gering. Nachteilige Folgen dessen sind Feinsandverluste bzw. eine Verschlechterung der Feinsandqualität.

Durch die erfindungsgemäße Lösung wird die Trennschärfe unter Ausnutzung der natürlichen Sedimentation wesentlich erhöht, indem sich in der Schöpfradwanne praktisch übereinander drei Zonen ausbilden - eine untere Zone mit Feinsand, eine darüberliegende Zone mit Recyclingwaschwasser, das Feinstsand und noch nicht vollständig aufgelöste Lehmteilchen enthält, nachfolgend als Waschzone bezeichnet, und eine obere Schlamm und Lehm enthaltende Abwasserzone.

Wie bereits oben erwähnt, sind an der Auslaufseite der Schöpfradwanne beidseitig vom Rad Kanäle vorgesehen, die in Wassersammelreservoirs führen. Wird nun aus diesen Reservoirs Wasser abgepumpt, was permanent geschieht, strömt aufgrund der Lageenergie des Wassers innerhalb der Schöpfradwanne automatisch Wasser durch die Kanäle nach, d.h. in der Schöpfradwanne bildet sich sehr schnell aus einer turbulenten Strömung am Einlauf eine gleichmäßige gezielte Querströmung zu den Ansaugöffnungen der Kanäle hin - die sogenannte Waschzone - aus.

Mit dem Waschwasser durchlaufen alle Feststoffteilchen (Feinsand, Lehm, Ton, Schlamm) vom Einlauf her die Waschzone. Die feinsten aufgelösten Lehm-, Schlammteilchen und die Feinstsandteilchen verlassen die Waschzone, indem sie nach oben aufsteigen und mit dem Abwasser etwa im rechten Winkel zur Strömungsrichtung der Waschzone nach rechts und links zu den Überströmrinnen fließen. Alle Feinsandkörner durchlaufen von oben nach unten die Waschzone, bevor sie sich auf dem Schöpfrad-Wannenboden absetzen können. Zu ihrer natürlichen Sinkgeschwindigkeit addiert sich dabei die hydraulische Zugkraft des Recyclingwassers. Durch die Wirkung der Waschzone wird somit die Aufstiegshöhe von Lehm, Ton, Schlamm und Feinstsand vergrößert, während die Absetzhöhe von Feinsand kleiner wird.

Alle in der Waschzone verbleibenden Feststoffteilchen wie Feinstsand und noch nicht vollständig aufgelöster Lehm werden mit dem Recyclingwaschwasser in die Kieswaschanlage zurückgeführt. Größere Lehmteilchen setzen sich somit nicht mit dem Feinsand ab, sondern gelangen erneut in den Waschkreislauf, in dem sie sich weiter auflösen, um dann beim Wiedereintritt in die Schöpfradwanne schneller an die Oberfläche zu steigen und mit dem Abwasser ausgetragen zu werden.

Mit der Entnahme des Recyclingwaschwassers aus der Schöpfradwanne ist neben der Verbesserung der Trennschärfe ein weiterer Effekt verbunden. Dadurch verringert sich nämlich bei gleichbleibender Gesamtwaschwassermenge die Strömungsgeschwindigkeit an den Überlaufrinnen, d.h. in diese Strömung gelangte Feinsandpartikel haben mehr Zeit, sich abzusetzen, so daß sich mehr Feinsand gewinnen läßt.

Wird die entnommene Recyclingwaschwassermenge erhöht, erhöht sich die Strömungsgeschwindigkeit in der Waschzone gleichermaßen, in den übrigen Zonen der Schöpfradwanne bleibt dagegen die Strömungsgeschwindigkeit unverändert, solange die Frischwassermenge gleich bleibt. Das bedeutet, daß trotz einer Erhöhung der Gesamtwaschwassermenge (Frischwasser plus Recyclingwaschwasser) bei gleichbleibender Frischwassermenge keine größeren Feinsandverluste im Abwasser zu verzeichnen sind.

Durch eine Veränderung der Frischwassermenge (m³/h) kann die Feinsandsiebkurve im unteren Bereich der Partikelgrößen von 0,032 mm bis 0,125 mm verändert werden.

Wird die Frischwassermenge größer, so werden mehr Partikel von 0 - 0,125 mm über die Überströmrinnen ausgespült.

Wird die Frischwassermenge kleiner, so werden weniger Partikel von 0 - 0,125 mm über die Überströmrinnen ausgespült.

Eine Mischung von 50% Frischwasser und 50% Recyclingwaschwasser ergibt eine gute Kombination.

Es ist auch eine Mischung von 40% Frischwasser und 60% Recyclingwaschwasser möglich.

Die Ansaugöffnungen der Kanäle sind so tief gelegt, daß ihre Sogwirkung auf die Abwasserschicht keinen oder nur einen geringen Einfluß hat. In der Praxis hat sich herausgestellt, daß eine Tiefe der Ansaugöffnungen von 500 bis 700 mm unterhalb des Wasserspiegels in der Schöpfradwanne ausreichend ist, um die etwa 300 mm starke Abwasserschicht nicht oder zumindest nicht nennenswert zu beeinflussen, so daß die Bestandteile dieser Schicht ungestört in Richtung Überströmrinnen abfließen können.

In ihrem Inneren weisen die Kanäle Pakete paralleler Platten auf. Diese Platten sind vorgesehen, um in die Sogwirkung der Kanäle gelangte Feststoffteilchen, insbesondere Feinsandteilchen, aus dem Recyclingwaschwasser abzuscheiden. Durch die Schrägstellung der Platten wird die Abscheidefläche erhöht. Weiterhin dienen die parallelen Platten der Vergleichmäßigung der Strömung innerhalb der Kanäle.

Neben der Erhöhung der Feinsandqualität und -quantität und der Verringerung der Abwassermenge hat die erfindungsgemäße Lösung den erheblichen Vorteil, daß die Frischwassermenge für die Kies- und Sandaufbereitung durch die Rückführung von Recyclingwaschwasser aus dem Entwässerungs-Schöpfrad wesentlich verringert werden kann. Wie oben dargelegt, kann die Wasserersparnis bis zu 50, sogar 60% betragen.

In weiterer Ausgestaltung der Erfindung ist die Ansaugtiefe jedes Kanals mittels eines an seiner Vorderseite nach oben und unten verschiebbaren Ansaugsteuerkantenbleches einstellbar. Die minimale Tiefe, aus der Recyclingwaschwasser entnommen werden kann, ist durch die Einbauhöhe der Kanäle festgelegt. Mit den Ansaugsteuerkantenblechen ist der Bereich minimale bis maximale Ansaugtiefe einstellbar. Der Ansaugquerschnitt unterhalb eines jeden Kanals bis zum abgesetzten Feinsand auf dem Schöpfrad-Wannenboden kann so optimal auf das jeweilige Kiesvorkommen abgestimmt werden. Die maximale Einstelltiefe jedes Ansaugsteuerkantenbleches bestimmt sich dadurch, daß bei maximaler Recyclingwaschwassermengen-Entnahme kein abgesetzter Feinsand vom Schöpfrad-Wannenboden in das Recyclingwaschwasser gelangt. Das kann durch Prüfung der Feststoffmenge im Recyclingwaschwasser kontrolliert werden.

Es ist zweckmäßig, die Ansaugsteuerkanten der Ansaugsteuerkantenbleche schräg auszuführen, und zwar derart, daß diese Kanten annähernd parallel zum Niveau des abgesetzten Feinsandes verlaufen. Dadurch ist eine optimale Einstellung des Ansaugquerschnitts unterhalb eines jeden Kanals bis zum abgesetzten Feinsand möglich.

In Weiterbildung der Erfindung sind die Kanäle durch vertikale Trennwände in nebeneinanderliegende Abteile unterteilt, wobei jedes Abteil ein Ansaugsteuerkantenblech aufweist. Diese Unterteilung hat fertigungs- und montagetechnische Vorteile. Insbesondere ist aber durch die Zuordnung von je einem Ansaugsteuerkantenblech zu jedem Abteil eine noch bessere Einstellung der Ansaugtiefe möglich. In der Nähe des Rades können die Ansaugsteuerkantenbleche weniger tief von der Wasseroberfläche und ganz außen in den beruhigten Zonen tiefer eingestellt werden. In den beruhigten Zonen ist die Lehmkonzentration an der Oberfläche sehr groß, die darunter abgesetzte Feinsandhöhe aber geringer als in der Nähe der Schöpfradbecher. Wird in den beruhigten Zonen tiefer Recyclingwaschwasser entnommen, kann über die Überströmrinnen das Abwasser mit hoher Lehmkonzentration ungestört abfließen.

Bei Unterteilung der Kanäle in Abteile ist es vorteilhaft, wenn die Abteile oberhalb der Plattenpakete über Öffnungen in den Trennwänden wasserseitig verbunden sind. Diese Ausbildung ist zweckmäßig, wenn die Durchtrittsöffnungen in der Wannenwandung in mehr als ein Wassersammelreservoir führen, aus denen unterschiedliche Recyclingwaschwassermengen entnommen werden. Ohne die wasserseitige Verbindung der Abteile würden sich dann nämlich in den jeweiligen Abteilen unterschiedliche Strömungsgeschwindigkeiten ausbilden. Durch die Öffnungen in den Trennwänden sind die Kanalabteile mit allen jeweils vorhandenen Wassersammelreservoirs verbunden, wodurch sich die unterschiedliche Wasserentnahme aus diesen Reservoirs ausgleicht. Die Folge ist eine annähernd gleiche Strömungsgeschwindigkeit in den einzelnen Abteilen von unten nach oben.

Es ist weiterhin von Vorteil, wenn die Kanäle symmetrisch zum Rad angeordnet und wenn die Wassersammelreservoirs wasserseitig verbunden sind. Diese Maßnahmen tragen zu gleichen Strömungsbedingungen in den Wannenteilen rechts und links vom Rad bei.

Es ist ferner zweckmäßig, wenn die in den Kanälen angeordneten Platten vertikal gewellt sind. Durch diese Ausbildung wird die Stabilität der Platten erhöht, d.h. sie können aus relativ dünnen Blechen gefertigt werden. Des weiteren wird durch die Wellung eine unerwünschte Querströmung in den Kanälen weitestgehend unterdrückt. In den durch die Wellung gebildeten "Tälern" können die in den Kanälen abgeschiedenen Feststoffteilchen zudem ungestörter zu Boden gleiten.

Obwohl die Erfindung vorstehend nur anhand eines Entwässerungs-Schöpfrades erläutert worden ist, kann die erfindungsgemäße Lösung ohne weiteres bei den sogenannten Sandfängen zur Anwendung kommen, bei denen sich die Wanne bei sonst gleicher Ausbildung nur einseitig vom Schöpfrad erstreckt.

Die Erfindung wird nachfolgend anhand von in der Zeichnung dargestellten Ausführungsbeispielen näher erläutert. In der Zeichnung stellen dar:
- Fig. 1a: ein Entwässerungs-Schöpfrad in einer ersten Ausführungsform in Seitenansicht,
- Fig. 1b: das Entwässerungs-Schöpfrad nach Fig. 1a in Vorderansicht,
- Fig. 1c: das Entwässerungs-Schöpfrad nach Fig. 1a in Draufsicht,
- Fig. 2: eine schematische Schnittdarstellung A-B nach Fig. 1c mit den drei Zonen - Feinsand, Recyclingwaschwasser, Schlamm-Lehm-Wasser,
- Fig. 3: einen Blick von oben bzw. unten in einen Kanal mit wellblechartigen Lamellenpaketen,
- Fig. 4a: ein Entwässerungs-Schöpfrad in einer zweiten Ausführungsform in Vorderansicht,
- Fig. 4b: das Entwässerungs-Schöpfrad nach Fig. 4a in Seitenansicht,
- Fig. 4c: das Entwässerungs-Schöpfrad nach Fig. 4a in Draufsicht,
- Fig. 5a: eine schematische Schnittdarstellung A-B nach Fig. 4c unter Weglassung der Entwässerungs-Siebmaschine,
- Fig. 5b: eine schematische Ansicht einer Wannenhälfte, die einen Blick vom Wanneninneren her auf einen in Abteile unterteilten Kanal mit Ansaugsteuerkantenblechen zeigt,
- Fig. 6: ein Blick von oben bzw. von unten in einen in vier Abteile unterteilten Kanal mit trapezförmig gewellten Lamellenpaketen und jedem Abteil zugeordneten Ansaugsteuerkantenblechen, und
- Fig. 7: einen lotrechten Schnitt durch einen an der Wannenwandung angebrachten Kanal mit Ansaugsteuerkantenblech.

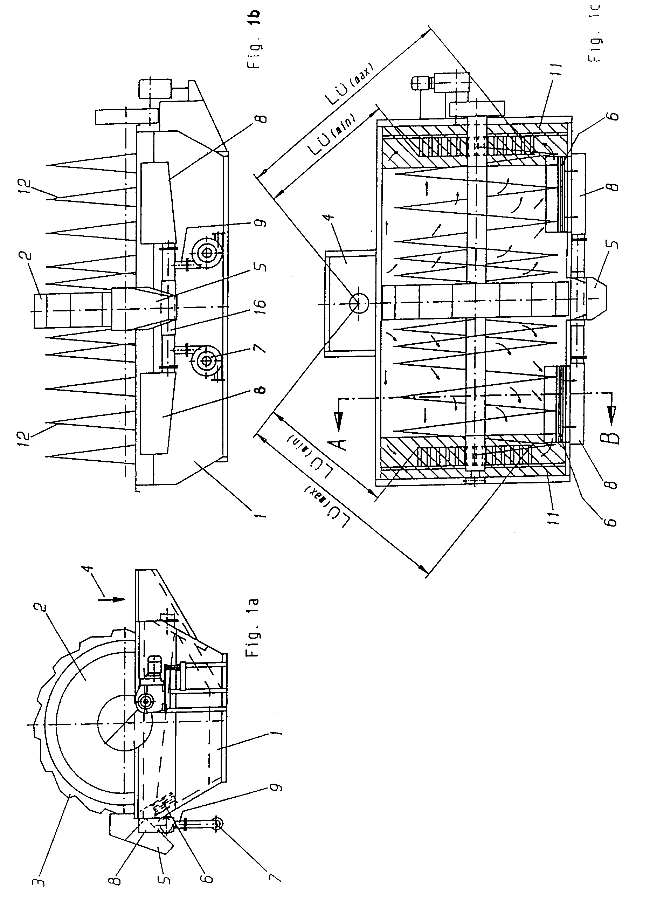

Das in Fig. 1a dargestellte Entwässerungs-Schöpfrad weist eine Wanne 1 auf, in der ein Rad 2 mit an seinem Umfang angebrachten Schöpfbechern 3 angeordnet ist, das sich entgegen dem Uhrzeigersinn dreht. Dabei nehmen die Schöpfbecher 3 einen Teil des Sand-Lehm-Schlamm-Wasser-Gemisches auf, das in einen an der rechten Stirnseite mit etwa 30° Neigung angeordneten Einlauf 4 eingegeben wird. Auf dem Weg zu dem an der gegenüberliegenden Wannenseite angeordneten Auslauf 5 läuft der größte Teil des Wassers mit dem Lehm und Schlamm durch Siebe in den Schöpfbechern 3 in die Wanne 1 zurück, so daß der Sand fast trocken am Auslauf 5 auf ein nicht dargestelltes Förderband gegeben werden kann.

An der Wannenwand, an der sich der Auslauf 5 befindet, sind innerhalb der Wanne 1 zwei schräg nach oben geneigte Kanäle 6 angeordnet, die an ihrem oberen Ende über in der Wannenwandung vorgesehene Durchtrittsöffnungen 17 in je eine außen an die Wanne 1 angeschraubte Sammelrinne 8 führen. Die beiden Sammelrinnen 8 sind über eine Rohrleitung 16 miteinander verbunden, an die zwei Pumpen 7 angeschlossen sind. Wenn die Pumpen 7 arbeiten, wird der Wasserstand in den Sammelrinnen 8 abgesenkt, und es fließt Wasser aus der Wanne 1, genauer gesagt, aus der Waschzone 14, nach. Aufgrund der recyclingwaschwasserseitigen Verbindung der beiden Sammelrinnen 8 gleichen sich unterschiedliche Förderleistungen der Pumpen 7 aus, so daß in beiden Wannenhälften gleiche Strömungsgeschwindigkeiten in der Waschzone 14 vorliegen. Die Pumpen 7 fördern das aus dem Feinsand-Schöpfrad gewonnene Recyclingwaschwasser über nicht dargestellte Rohrleitungen in eine vorgeschaltete Kieswaschanlage.

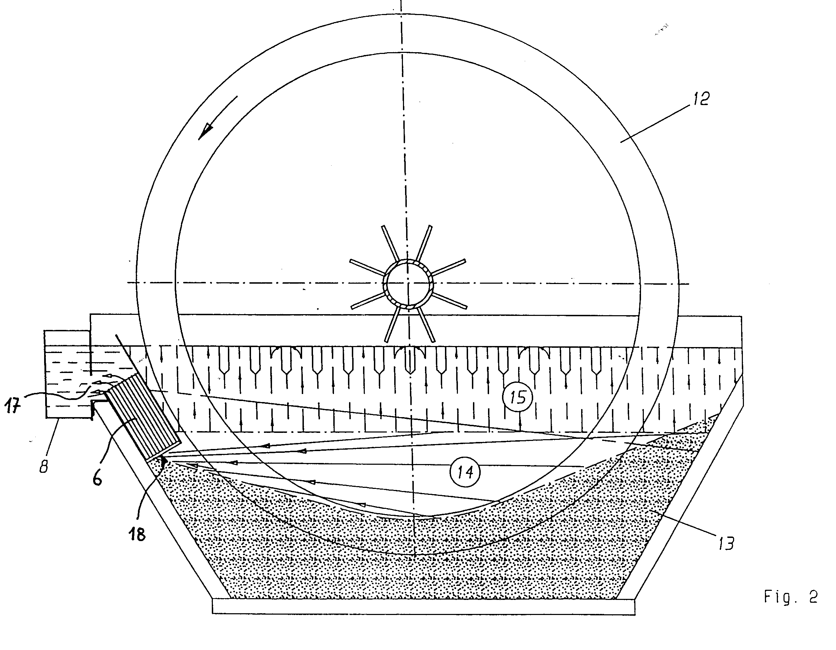

In den Kanälen 6 befindet sich jeweils ein Lamellenpaket aus parallelen Blechen 10, die die gleiche Neigung haben wie die Vorder- bzw. Rückwand des Kanals 6 und die Wannenwand. Wie am besten aus Fig. 2 zu erkennen ist, ist die Vorderwand des Kanals 6 so weit nach oben verlängert, daß sie aus dem Wasserspiegel in der Wanne 1 herausragt. Dadurch wird das gewonnene Recyclingwaschwasser vom übrigen Wanneninhalt abgeschirmt.

Aus den Fig. 1b und 1c ist ersichtlich, daß das Rad 2 wie auch der Einlauf 4 und der Auslauf 5 in der Mitte der Wanne 1 angeordnet ist und die beiden Kanäle 6 symmetrisch zum Rad 2 liegen. An den beiden anderen Wänden der Wanne 1 befinden sich Überströmrinnen 11, über die ein Gemisch aus Wasser, Lehm und Schlamm die Wanne 1 verläßt.

Beiderseits des Rades 2 sind Förderschnecken 12 angeordnet, die sich gegensinnig drehen und den sich auf dem Boden der Wanne 1 absetzenden Feinsand zur Mitte in den Bereich des Rades 2 fördern.

Vorzugsweise wird etwa die Hälfte des in der Wanne 1 anfallenden Wassers über die Kanäle 6 abgeführt. Dann beträgt die Geschwindigkeit des über die Überströmrinnen 11 abfließenden Wassers nur noch 1/4 der Einlaufströmungsgeschwindigkeit. Dadurch setzt sich mehr Feinsand ab, und es wird ein Lehm-Schlamm-Abwasser mit weniger Feinsand und höherer Konzentration von Lehm und Schlamm erzeugt.

Wie Fig. 2 zeigt, ist die Absetzhöhe des Feinsandes 13 quer durch die Wanne 1 an der Einlaufseite sehr klein, in der Mitte am größten und wird dann zur Ansaugöffnung 18 der Kanäle 6 wieder kleiner. Die Ansaugöffnungen 18 sind etwa 1 bis 2 m lang und verhältnismäßig tief angeordnet, d.h. sie liegen vorzugsweise etwa 500 bis 700 mm unter dem Wasserspiegel. Des weiteren sind die Ansaugöffnungen 18 möglichst weit vom Einlauf 5 entfernt angeordnet. Aufgrund dieser Maßnahmen werden die Partikel über relativ große Wegstrecken quer durch die Schöpfradwanne 1 nach unten gezogen. Je näher die feineren Sandkörner zur Ansaugöffnung 18 kommen, desto kleiner wird die Absetzhöhe, und die Sandkörner treffen auf dem Boden auf. Oberhalb des abgesetzten Sandes 13 bildet sich eine Zone 14 aus, in der sich infolge der gleichmäßigen Querströmung Recyclingwaschwasser mit etwas Feinsand, Lehm und Schlamm unter 0,1 mm befindet, während sich eine obere, etwa 300 mm unter den Wasserspiegel reichende Zone 15 mit sehr viel Lehm und Schlamm unter 0,06 mm ausbildet. Diese obere Abwasserschicht wird nur gering oder nicht mehr von der Sogwirkung der Ansaugöffnungen 18 beeinflußt, so daß die Partikel der Abwasserschicht im wesentlichen ungestört in Richtung Überströmrinnen 11 fließen können. In dem Bereich unmittelbar bei den Überströmrinnen 11 tritt eine völlige Beruhigung des Lehm-Schlamm-Wassers ein. Die Strömungsgeschwindigkeit ist dort viel geringer als in den anderen Zonen der Wanne 1. Die Strömungsrichtung wird nicht mehr beeinflußt, und die Überlaufhöhen der Überströmrinnen werden bei LÜ₍ₘₐₓ₎ und LÜ₍ₘᵢₙ₎ annähernd gleich. In den schraffierten Flächen von Fig. 1c findet die genaueste Trennung von Lehm-Schlamm- und Feinsandpartikeln statt.

Der in dem über die Kanäle 6 gewonnenen Recyclingwaschwasser enthaltene Lehm gelangt erneut in die Kieswaschanlage, wird dort weiter aufgelöst und steigt dann beim Eintritt in die Schöpfradwanne 1 schneller an die Oberfläche der Zone 15.

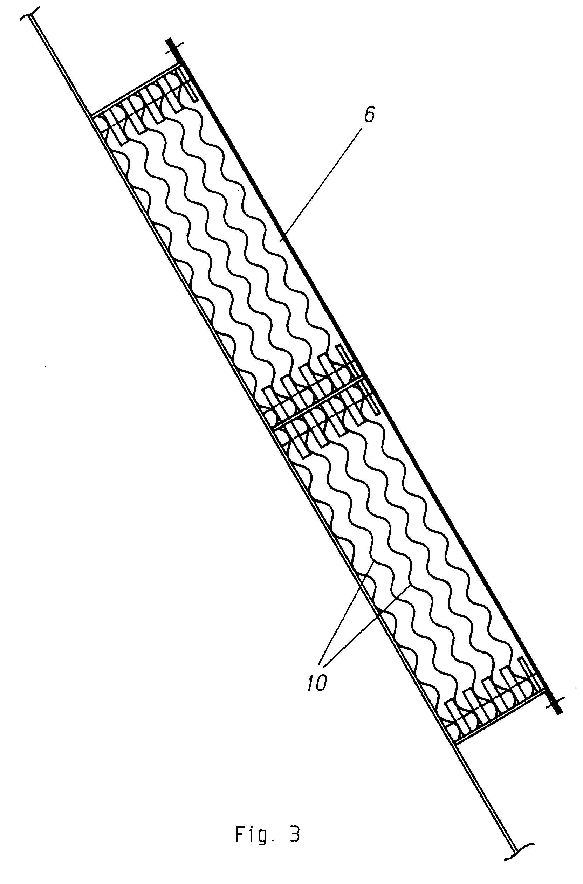

Fig. 3 zeigt einen der Kanäle 6 in größeren Einzelheiten. Die darin parallel angeordneten Platten 10 sind wellblechförmig ausgebildet und so angeordnet, daß die Wellen vertikal verlaufen, wobei der Ansaugquerschnitt des Kanals 6 so bemessen ist, daß Grobsand über 0,1 mm nicht in das Recyclingwaschwasser gelangt.

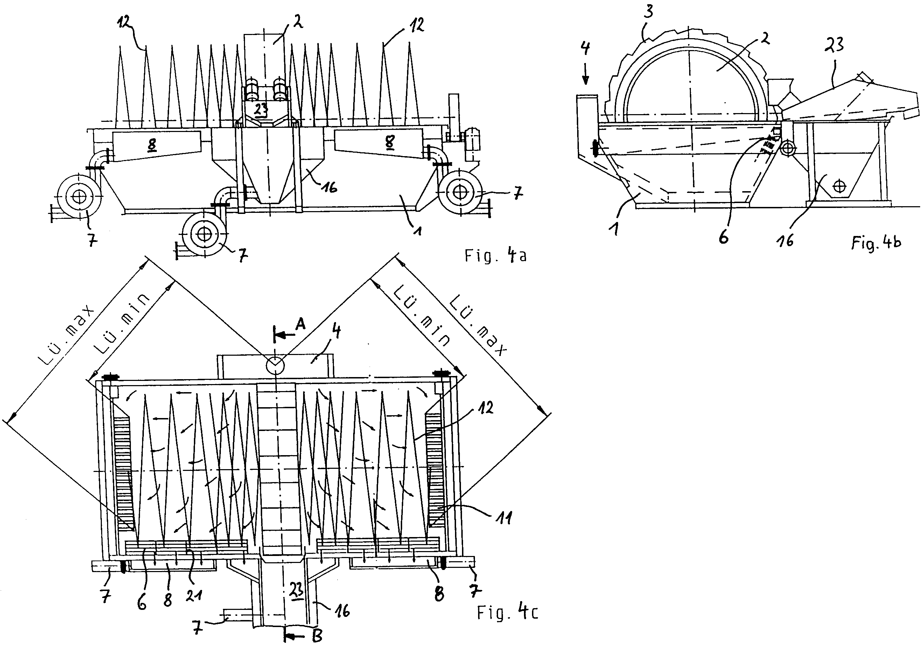

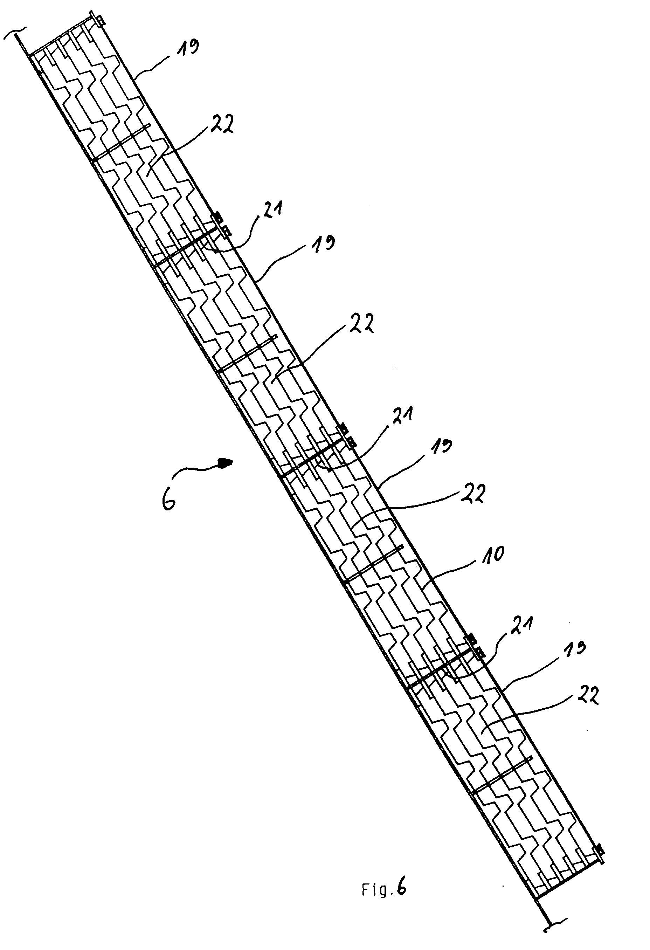

In dem in den Fig. 4a bis 7 dargestellten weiteren und nachstehend erläuterten Ausführungsbeispiel werden die Bezugszeichen des ersten Ausführungsbeispiels beibehalten, sofern damit funktionsgleiche Bauteile bezeichnet werden.

Das Feinsand-Schöpfrad dieses Beispiels entspricht in seinem wesentlichen Aufbau dem des ersten Ausführungsbeispiels. Es weist aber im Gegensatz dazu an seinem Sandauslauf eine Entwässerungs-Siebmaschine 23 auf, unter der eine Auffangwanne 16 angeordnet ist. Diese Auffangwanne 16 bildet neben den beiden Sammelrinnen 8 ein weiteres Wassersammelreservoir. An die Sammelrinnen 8 und die Auffangwanne 16 ist je eine Pumpe 7 angeschlossen.

Die Kanäle 6 sind durch lotrechte Trennwände 21 in vier Abteile 22 unterteilt, wobei in jedem Abteil 22 ein Lamellenpaket mit trapezförmig gewellten Flächen 10 angeordnet ist. Die Lamellenpakete enden oben kurz unterhalb der in der Wannenwandung ausgebildeten Durchtrittsöffnungen 17. In dem Raum oberhalb der Lamellenpakete sind die Trennwände 21 mit Öffnungen 24 versehen, über die die Abteile 22 der Kanäle 6 recyclingwaschwasserseitig untereinander verbunden sind.

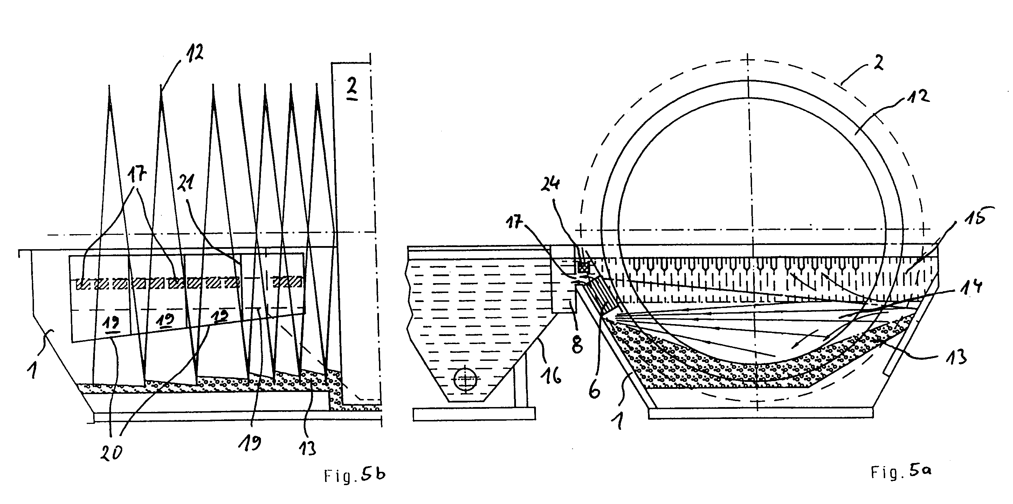

Wie aus Fig. 5b, insbesondere aber aus Fig. 4c zu erkennen ist, führen die den drei äußeren Abteilen 22 jedes Kanals 6 zugeordneten Durchtrittsöffnungen 17 jeweils in eine Sammelrinne 8, während die dem jeweils inneren Abteil 22 jedes Kanals zugeordnete Durchtrittsöffnung 17 in die Auffangwanne 16 der Entwässerungs-Siebmaschine 23 führt. Auf diese Weise sind die drei Wassersammelreservoirs - Sammelrinnen 8 und Auffangwanne 16 - recyclingwaschwasserseitig miteinander verbunden, so daß unterschiedliche Förderleistungen der Pumpen 7, wie oben bereits erläutert, nicht zu unterschiedlichen Strömungsgeschwindigkeiten in der Waschzone 14 links und rechts vom Rad 2 führen.

Jedem Abteil 22 der Kanäle 6 ist ein Ansaugsteuerkantenblech 19 zugeordnet, das jeweils an der Vorderseite der Kanäle 6 nach oben und unter verschiebbar angeordnet ist. Die Ansaugsteuerkanten 20 dieser Bleche 19 sind etwa dem Niveau des auf dem Wannenboden abgesetzten Feinsandes 13 folgend, wie in Fig. 5b dargestellt, abgeschrägt.

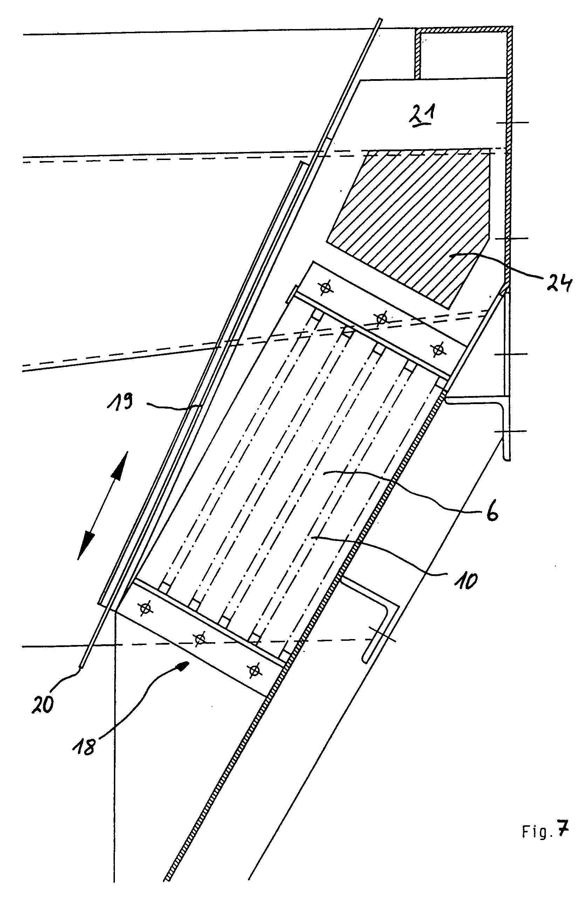

In der in Fig. 7 gezeigten Ausführung ragen die Trennwände 21 zum Wanneninneren hin über die Kanal-Vorderwand hinaus. Dadurch laufen die Ansaugsteuerkantenbleche 19 im Winkel zur Kanal-Vorderwand. Eine derartige Konstruktion ist dann sinnvoll, wenn ansonsten auf dem Verschiebeweg der Ansaugsteuerkantenbleche 19 nach oben keine Bewegungsfreiheit gegeben wäre.

## Patentansprüche

1. Entwässerungs-Schöpfrad zur Rückgewinnung von Feinsand, bestehend aus einer Wanne (1), einem in der Mitte der Wanne angeordneten, auf seinem Umfang mit Schöpfbechern (3) versehenen Rad, einem Einlauf für das Sand-, Lehm-, Schlamm-, Wassergemisch an der einen Seite der Wanne im Bereich der aus dem Wasserspiegel auftauchenden Schöpfbecher (3), einem Auslauf für den von den Schöpfbechern abgegebenen Sand auf der gegenüberliegenden Seite der Wanne, koaxial zu dem Rad auf dessen beiden Seiten angeordneten, gegensinnig angetriebenen Förderschnecken zum Zubringen des auf dem Boden der Wanne abgesetzten Feinsandes in den Bereich des Rades und Überströmrinnen (11) für das Abwasser an den beiden anderen, parallel zur Radebene verlaufenden Seiten der Wanne, dadurch gekennzeichnet, daß innerhalb der Wanne (1) an der dem Einlauf (4) gegenüberliegenden Wannenwandung beidseitig vom Rad (2) Kanäle (6) angeordnet sind, daß die Kanäle (6) an ihrem oberen Ende über eine oder mehrere Durchtrittsöffnung(en) (17) in der Wannenwandung in ein oder mehrere Wassersammelreservoir(s) (8, 16) führen, derart, daß sich in diesen Wassersammelreservoirs (8, 16) der gleiche Flüssigkeitsstand wie in der Wanne (1) einstellt, wobei die Wassersammelreservoirs (8, 16) mit mindestens einer saugenden Pumpe (7) verbunden sind, die das durch die Kanäle (6) aus der Wanne (1) strömende Wasser als Recyclingwasser in eine dem Schöpfrad vorgeschaltete Kieswaschanlage zurückpumpen kann bzw. zurückpumpen können, und daß die Kanäle (6) an ihrem unteren Ende im genügenden Abstand von der Abwasserschicht (15) Ansaugöffnungen (18) aufweisen, von denen aus gesehen sie zur Seite des Auslaufs (5) hin schräg nach oben verlaufen.

2. Entwässerungs-Schöpfrad nach Anspruch 1, dadurch gekennzeichnet, daß die Kanäle (6) in ihrem Inneren ein Paket paralleler Platten (10) aufnehmen, welches unterhalb der Durchtrittsöffnungen (17) endet, wobei die Platten (10) im wesentlichen die Neigung der Kanäle (6) aufweisen.

3. Entwässerungs-Schöpfrad nach einem der vorstehenden Ansprüche, dadurch gekennzeichnet, daß die Ansaugtiefe jedes Kanals (6) mittels eines an seiner Vorderseite nach oben und unten verschiebbaren Ansaugsteuerkantenbleches (19) einstellbar ist.

4. Entwässerungs-Schöpfrad nach Anspruch 3, dadurch gekennzeichnet, daß die Ansaugsteuerkante (20) des Bleches (19) schräg ausgeführt ist, derart, daß sie annähernd parallel zum Niveau des abgesetzten Feinsandes (13) verläuft.

5. Entwässerungs-Schöpfrad nach einem der vorstehenden Ansprüche, dadurch gekennzeichnet, daß die Kanäle (6) durch vertikale Trennwände (21) in nebeneinanderliegende Abteile (22) unterteilt sind, wobei jedes Abteil (22) ein Ansaugsteuerkantenblech (19) aufweist.

6. Entwässerungs-Schöpfrad nach Anspruch 5, dadurch gekennzeichnet, daß die Abteile (22) oberhalb der Plattenpakete (10) und unterhalb des Flüssigkeitstandes über Öffnungen (24) in den Trennwänden (21) verbunden sind.

7. Entwässerungs-Schöpfrad nach einem der vorstehenden Ansprüche, dadurch gekennzeichnet, daß die Kanäle (6) symmetrisch zum Rad (2) angeordnet sind.

8. Entwässerungs-Schöpfrad nach einem der vorstehenden Ansprüche, dadurch gekennzeichnet, daß die Wassersammelreservoirs (8, 16) unterhalb des Flüssigkeitstandes verbunden sind.

9. Entwässerungs-Schöpfrad nach einem der vorstehenden Ansprüche, dadurch gekennzeichnet, daß die in den Kanälen (6) angeordneten Platten (10) vertikal gewellt sind.

10. Sandfang zur Rückgewinnung von Feinsand, bestehend aus einer Wanne (1), einem an einer Seitenwand in der Wanne angeordneten, auf seinem Umfang mit Schöpfbechern (3) versehenen Rad, einem Einlauf für das Sand-, Lehm-, Schlamm-, Wassergemisch an der Vorderseite der Wanne im Bereich der aus dem Wasserspiegel auftauchenden Schöpfbecher (3), einem Auslauf für den von den Schöpfbechern abgegebenen Sand auf der Vorderseite der Wanne, einer koaxial zum Rad angeordneten gegensinnig angetriebenen Förderschnecke zum Zubringen des auf dem Boden der Wanne abgesetzten Feinsandes in dem Bereich des Rades und einer Überströmrinne (11) für das Abwasser auf der dem Rad gegenüberliegenden Seite der Wanne, dadurch gekennzeichnet, daß innerhalb der Wanne (1) an der dem Einlauf gegenüberliegenden Wannenwandung Kanäle angeordnet sind, daß die Kanäle an ihrem oberen Ende über eine oder mehrere Durchtrittsöffnung(en) (17) in der Wannenwandung in ein oder mehrere Wasserreservoir(s) (8, 16) führen, derart, daß sich in diesem Wassersammelreservoir (8, 16) der gleiche Flüssigkeitsstand wie in der Wanne (1) einstellt, wobei die Wassersammelreservoirs (8, 16) mit mindestens einer saugenden Pumpe (7) verbunden sind, die das durch die Kanäle (6) aus der Wanne (1) strömende Wasser als Recycling-Wasser in eine dem Sandfang vorgeschaltete Kieswaschanlage zurückpumpen kann bzw. zurückpumpen können, und daß die Kanäle (6) an ihrem unteren Ende im genügenden Abstand von der Abwasserschicht (15) Ansaugöffnungen (18) aufweisen, von denen aus gesehen sie zur Seite des Auslaufs (5) hin schräg nach oben verlaufen.

## Claims

1. Drainage scoop wheel for recovering fine sand, consisting of a trough (1), a wheel arranged in the centre of the trough and provided with scoop buckets (3) on its periphery, an inlet for the sand-, clay-, sludge-, water-mixture on one side of the trough in the area of the scoop buckets (3) emerging from the water level, an outlet for the sand, delivered by the scoop buckets, on the opposite side of the trough, screw conveyors, arranged coaxially with respect to the wheel on its two sides and driven in the opposite direction, for feeding the fine sand deposited on the bottom of the trough into the area of the wheel, and overflow channels (11) for the waste water at the other two sides of the trough running parallel to the wheel plane, characterised in that ducts (6) are arranged inside the trough (1) on the trough wall opposite the inlet (4) on both sides of the wheel (2), in that the ducts (6) lead into one or more water-collecting reservoir(s) (8, 16) at their top end via one or more passage openings (17) in the trough wall in such a way that the same liquid level as in the trough (1) appears in these water-collecting reservoirs (8, 16), the watercollecting reservoirs (8, 16) being connected to at least one suction pump (7) which can pump the water, flowing through the ducts (6) from the trough (1), as recycling water back into a gravel washing plant arranged upstream of the scoop wheel, and in that the ducts (6) have at their lower end at an adequate distance from the waste-water layer (15) suction openings (18), as viewed from which they run upwards at an angle towards the side of the outlet (5).

2. Drainage scoop wheel according to claim 1, characterised in that the ducts (6) accommodate a stack of parallel plates (10) in their interior, which stack (10) ends underneath the passage openings (17), the plates (10) essentially having the inclination of the ducts (6).

3. Drainage scoop wheel according to any of the preceding claims, characterised in that the suction depth of each duct (6) can be set by means of a suction-control-edge sheet (19) displaceable upwards and downwards on its front side.

4. Drainage scoop wheel according to claim 3, characterised in that the suction control edge (20) of the sheet (19) is designed to be slanted in such a way that it runs approximately parallel to the level of the deposited fine sand (13).

5. Drainage scoop wheel according to any of the preceding claims, characterised in that the ducts (6) are subdivided into adjacent compartments (22) by vertical dividing walls (21), each compartment (22) having a suction-control-edge sheet (19).

6. Drainage scoop wheel according to claim 5, characterised in that the compartments (22) are connected above the plate stacks (10) and below the liquid level via openings (24) in the dividing walls (21).

7. Drainage scoop wheel according to any of the preceding claims, characterised in that the ducts (6) are arranged symmetrically to the wheel (2).

8. Drainage scoop wheel according to any of the preceding claims, characterised in that the water-collecting reservoirs (8, 16) are connected below the liquid level.

9. Drainage scoop wheel according to any of the preceding claims, characterised in that the plates (10) arranged in the ducts (6) are vertically corrugated.

10. Sand trap for recovering fine sand, consisting of a trough (1), a wheel arranged on a side wall in the trough and provided with scoop buckets (3) on its periphery, an inlet for the sand-, clay-, sludge-, water-mixture on the front side of the trough in the area of the scoop buckets (3) emerging from the water level, an outlet for the sand, delivered by the scoop buckets, on the front side of the trough, a screw conveyor, arranged coaxially with respect to the wheel and driven in the opposite direction, for feeding the fine sand, deposited on the bottom of the trough, in the area of the wheel, and an overflow channel (11) for the waste water on the side of the trough opposite the wheel, characterised in that ducts are arranged inside the trough (1) on the trough wall opposite the inlet, in that the ducts lead into one or more water reservoirs (8, 16) at their top end via one or more passage openings (17) in the trough wall in such a way that the same liquid level as in the trough (1) appears in this water-collecting reservoir (8, 16), the water-collecting reservoirs (8, 16) being connected to at least one suction pump (7) which can pump the water, flowing through the ducts (6) from the trough (1), as recycling water back into a gravel washing plant arranged upstream of the sand trap, and in that the ducts (6) have at their lower end at an adequate distance from the waste-water layer (15) suction openings (18), as viewed from which they run upwards at an angle towards the side of the outlet (5).

## Revendications

1. Roue d'assèchement à godets pour récupérer du sable fin, consistant en une cuve (1), une roue, disposée dans le milieu de la cuve, pourvue à sa périphérie d'augets (3), une entrée pour le mélange de sable, de glaise, de boue et d'eau sur le premier côté de la cuve dans la zone des godets (3) émergeant de la surface de l'eau, une sortie pour le sable fourni par les godets sur le côté opposé de la cuve, des vis sans fin coaxiales à la roue sur ces deux côtés et tournant en sens contraire pour l'alimentation du sable fin déposé sur le fond de la cuve dans la zone de la roue et des goulottes de surintensité (11) pour l'eau résiduaire des deux autres côtés parallèles au plan de la roue, caractérisée en ce que, dans la cuve (1), sur la paroi de la cuve opposée à l'entrée (4) des deux côtés de la roue (2), sont disposés des canaux (6), en ce que les canaux (6) au niveau de leurs extrémités supérieures par un ou plusieurs orifices de passage (17) dans la paroi de la cuve mènent à un ou plusieurs réservoirs de collecte d'eau (8, 16), en ce que, dans ces réservoirs de collecte d'eau (8, 16), il y a le même niveau de liquide que dans la cuve (1), les réservoirs de collecte d'eau (8, 16) étant reliés à au moins une pompe aspirante (7) qui peut pomper ou peuvent pomper l'eau sortant de la cuve (1) par les canaux (6) en tant qu'eau de recyclage dans une installation de lavage de graviers qui se trouve en amont de la cuve (1), et en ce que les canaux (6) à leurs extrémités inférieures à une distance suffisante de la couche d'eaux usées (15) présentent des orifices d'aspirations (18) d'où ils montent obliquement par rapport au côté de la sortie (5).

2. Roue d'assèchement à godets suivant la revendication 1, caractérisée en ce que les canaux (6) comportent, à l'intérieur, un paquet de plaques parallèles (10) qui se termine sous les orifices de passage (17), les plaques (10) présentant essentiellement l'inclinaison des canaux (6).

3. Roue d'assèchement à godets suivant l'une des revendications précédentes, caractérisée en ce que la profondeur d'aspiration de chaque canal (6) est réglable au moyen d'une tôle de rampe hélicoïdale d'aspiration (19), sur son côté amont, réglable vers le haut et vers le bas.

4. Roue d'assèchement à godets suivant la revendication 3, caractérisée en ce que la rampe hélicoïdale d'aspiration (20) de la tôle (19) est dirigée en biais de sorte qu'elle dévie en s'approchant parallèlement au niveau du sable fin décanté (13).

5. Roue d'assèchement à godets suivant l'une des revendications précédentes, caractérisée en ce que les canaux (6) sont partagés par des cloisons verticales (21) en compartiments juxtaposés (22), chaque compartiment (22) présentant une tôle de rampe hélicoïdale d'aspiration.

6. Roue d'assèchement à godets suivant la revendication 1, caractérisée en ce que les compartiments (22) sont reliés au-dessus du paquet de plaques (10) et au-dessous du niveau de liquide par des orifices (24) dans les cloisons (21).

7. Roue d'assèchement à godets suivant l'une des revendications précédentes, caractérisée en ce que les canaux (6) sont prévus symétriques par rapport à la roue (2).

8. Roue d'assèchement à godets suivant l'une des revendications précédentes, caractérisée en ce que les réservoirs de collecte d'eau (8, 16) sont reliés au-dessous du niveau de liquide.

9. Roue d'assèchement à godets suivant l'une des revendications précédentes, caractérisée en ce que les plaques installées dans les canaux (6) sont ondulées verticalement.

10. Epurateur pour la récupération de sable fin consistant en une cuve (1), une roue, disposée sur une paroi latérale dans la cuve, pourvue à sa périphérie d'augets (3), une entrée pour le mélange de sable, de glaise, de boue et d'eau sur le côté avant de la cuve dans la zone des godets (3) émergeant de la surface de l'eau, une sortie pour le sable fourni par les godets sur le côté avant de la cuve, une vis sans fin coaxiale à la roue et tournant en sens contraire pour l'alimentation du sable fin décanté sur le fond de la cuve dans la zone de la roue et une goulotte de trop plein (11) pour l'eau résiduaire du côté opposé à la roue, caractérisé en ce que, à l'intérieur de la cuve (1), sur la paroi de la cuve opposée à l'entrée, sont disposés des canaux, en ce que les canaux, au niveau de leurs extrémités supérieures par un ou plusieurs orifices de passage (17) dans la paroi de la cuve, mènent à un ou plusieurs réservoirs de collecte d'eau (8, 16), de sorte que, dans ces réservoirs de collecte d'eau (8, 16), il y a le même niveau de liquide que dans la cuve (1), les réservoirs de collecte d'eau (8, 16) étant reliés à au moins une pompe aspirante (7) qui peut pomper ou peuvent pomper l'eau sortant de la cuve (1) par les canaux (6) en tant qu'eau de recyclage dans une installation de lavage de graviers qui se trouve en amont de l'épurateur, et en ce que les canaux (6) à leurs extrémités inférieures à une distance suffisante de la couche d'eaux usées (15) présentent des orifices d'aspirations (18) d'où ils montent obliquement par rapport au côté de la sortie (5).
